# EUROPEAN PATENT APPLICATION

(11) **EP 1 492 310 A2**
(43) Date of publication of application: **29.12.2004**
(21) Application number: 04253690.4
(22) Date of filing: 18.06.2004
(51) Int. Cl.: H04L 29/12

(54) **Industrial equipment network**

(30) Priority: 23.06.2003 US 601687
(71) Applicant: THE BOC GROUP, INC., Murray Hill, New Providence, New Jersey 07974 (US)
(72) Inventor: Russel, Thomas Cutler, Murray Hill, NJ 07974 (US); Winterfeldt, Charles, Plato, MN 55370 (US)
(74) Representative: Booth, Andrew Steven

(57) **Abstract**

In an industrial equipment network, each piece of equipment is provided a dedicated controller for providing control and identification information, and for being programmed to provide the interconnection and interaction of its associated piece of equipment with other equipment connected to the network, thereby permitting a SCADA system, via broadcasting from the controllers or polling the controllers, to self-configure itself to show a diagram of the entire equipment network and periodically update the diagram relative to changes thereto, and the status of the equipment on the network.

## Description

The present invention relates generally to the bidirectional communication of data and control signals from industrial equipment to control and monitoring devices that are either locally or remotely located relative to the industrial equipment, and more particularly to automating the transfer and manipulation of data to the control and monitoring devices upon the occurrence of changes in the data associated with the industrial equipment.

Current generation industrial equipment is often connected to a network to provide data associated with monitoring and control functions. In a typical application, a computer running SCADA (Supervisory Control and Data Acquisition) software communicates with individual or interconnected pieces or elements of industrial equipment over a data network. Quite often, the SCADA software is monitoring a number of different pieces of industrial equipment. To set up this system, the SCADA software is programmed with the network address of each piece of equipment, and also the mapping of specific information in the equipment to data registers within the equipment. By polling each piece of equipment and requesting the contents of the desired registers, the SCADA software can display the status of the entire system.

A distributed control system splits the control functions into smaller distributed elements located nearer to the device being controlled. This often simplifies the control task and provides fault tolerance since a failure of one controller does not cripple the entire system. Unfortunately, even if the control system is distributed, it is often required that there be a central monitoring system. Present SCADA systems must typically be manually programmed with the functionality of all of the elements in the system and the interconnection of those elements. As a result, although one might be able to add a new element to a distributed control system simply by plugging in a new controller, the SCADA system must be updated to reflect that change, and for any changes in the configuration of the interconnection of the pieces of equipment in the local industrial equipment network, the SCADA must typically be manually reprogrammed to show the new configuration for the equipment.

It is an aim of at least the preferred embodiment of the present invention to seek to solve this and other problems.

In a Supervisory Control and Data Acquisition System for monitoring and controlling pieces or elements of industrial equipment, means are provided for self-configuring the SCADA system. The self-configuring means includes means for permitting individual devices or elements in the associated machine boundary to broadcast their presence if newly added, and provide a description of their respective functionality and interaction or interconnection with other elements in the network, and subsequently to broadcast any changes thereto to the SCADA system, or be individually polled by the SCADA system for changes in the elements, respectively.

According to one aspect of the invention there is provided an industrial equipment network for interconnecting a plurality of devices, the network comprising:
a plurality of controllers each for providing a respective device with control and data functions for interacting with other devices in the equipment network, and other systems;
a data network for receiving from each controller information relating to its respective device and to the interaction of its device with other devices or equipment connected to the network;
and a Supervising Control and Data Acquisition (SCADA) system for receiving the information from the data network and utilising the received information to automatically create and/or up-date a network configuration representation.

In another aspect, the present invention provides a method of permitting a Supervisory Control and Data Acquisition (SCADA) system to automatically map the interconnection and interaction, and changes thereto, between a plurality of pieces of industrial equipment and/or a plurality of devices that may be connected to one another, said method comprising:
establishing a data network over which said pieces of industrial equipment and/or devices can selectively communicate with one another and with the SCADA system;
connecting different ones of said plurality of pieces of industrial equipment and/or devices each to either a common controller, or each to individual dedicated controllers, respectively, or each to a plurality of controllers, or some combination thereof; and
programming each controller to control and identify its associated piece of industrial equipment and/or device, and for transmitting data representative of the interconnection and interaction thereof with other ones of said plurality of pieces of industrial equipment and/or devices, both to the latter equipment and/or devices, and to said SCADA system over said data network.

Various embodiments of the present invention are described below with reference to the drawings, in which like items are indicated by the same reference designation, wherein:
Figure 1 is a block schematic diagram showing a simplified view of various machine elements or industrial equipment connected to an Ethernet network;
Figure 2 is a block schematic diagram showing an example of various pieces of semiconductor processing equipment connected to one another and to an Ethernet network;
Figure 3 is a block schematic diagram showing the pieces or elements of semiconductor equipment as connected in Figure 2, with the addition of more elements or equipment thereto;
Figure 4 is a flowchart showing the steps required for auto-discovery of a machine device or element on a network through use of device broadcasting, for one embodiment of the invention;
Figure 5 shows a flowchart for the auto-discovery and configuration of a machine device in a network through use of server polling;
Figure 6 shows a flowchart for providing the automatic configuration of a Supervisory Control and Data Acquisition System (SCADA);
Figure 7 shows an example of a SCADA Display of a "Distribution Screen" showing the internet connection of devices related to an H₂O₂ chemical typing and flow;
Figure 8 shows an example of a SCADA Display for a "Valve Box Screen" showing the connections or plumbing for an individual valve box;
Figure 9 is an example of a SCADA Display of a "Tool Status Screen" showing the status for an individual tool;
Figure 10 is an example of a SCADA Display showing a general device configuration for a valve manifold box that includes a plurality of valves;
Figure 11 shows an example of a SCADA Display for an individual valve; and
Figure 12 shows a screen image of a Web page showing the status of a piece of equipment.

It is the intent of this invention to provide a mechanism so that a distributed controller can alert a SCADA system of its presence, and provide both a description of its own functionality and its interaction or interconnection with other elements in the system. The SCADA system can then automatically use this descriptive information to dynamically build a system level representation of the system, or update the representation in real time in response to detected changes.

For the purpose of describing the invention, an example of a chemical distribution system such as one built by BOC Edwards Chemical Management Division will be used. A chemical distribution typically consists of a number of chemical dispenser units or modules (CDM), valve boxes and tools that use the chemicals. Each tool might use a number of chemicals and as a result would be connected to a plurality of valve boxes, one for each chemical. Each valve box is also typically connected to other valve boxes and/or a CDM. A supervisory controller is typically used to provide all control functions for the distribution of multiple chemicals within a facility. In a distributed control system, intelligence provided by a programmable logic controller, for example, is instead placed at each tool, valve box and CDM, or other piece of equipment in the system to be monitored and controlled. Each device is programmed to handle its interaction or interconnection with the other connected devices, and the supervisory or central controller is eliminated.

The initial setup for a new device or piece of equipment added to the industrial equipment network requires entering the name and physical location of the device and its interconnection to other devices in the system into the local controller. For example, when adding a new tool to the system, the tool is named and the connection to each valve box supplying a chemical is entered into the internal database of the tool's chemical controller. The IP (Internet Protocol) address can be entered manually or it can be obtained from a Dynamic Host Control Protocol (DHCP) server. When the tool chemical controller goes online, it sends a message to the SCADA system that it needs to be entered into the SCADA database. The SCADA system can then make the appropriate requests over a data network to the controller of the tool or piece of equipment to obtain the required information. In a like fashion, the tool controller also contacts the controller of every other device that it directly interacts with and notifies the device of the new connection. The interacting devices can then update their databases to reflect the addition of the new tool. Note that the controller for the tool's chemical system may also be used to control the operation of the tool or a separate operation controller may be used.

To maintain the integrity of the system, each device communicates on a regular basis with all other devices in the network that it interacts with. If a controller can no longer contact a connected device, a user can be notified either through SCADA or by a direct message from the device (e.g. e-mail message).

The SCADA system is programmed to automatically build a system level diagram by integrating the information from all of the controllers. Since each controller reports both its physical location and its logical and physical interconnections, the SCADA software can build both a physical map of the devices on the network as well as piping and electrical connections. Note that there may be elements in the system that have no controller, and these would not be automatically represented on the system diagram.

As indicated, this invention provides a mechanism for devices such as controllers associated with industrial equipment or tools, for example, to alert a SCADA system of their presence. Device Broadcasting or Server Polling can be used to notify the SCADA system of a new tool or piece of equipment on the network. When broadcasting or polling, the device controller for each device describes their respective tool's or equipment's functionality and interaction with other tools or equipment. The SCADA system then uses this information to dynamically build a spatial display of the devices and associated equipment, and their interconnections. If pieces of equipment are added or removed, the SCADA system will automatically update its records and display, so essentially, the SCADA system is "self-configuring."

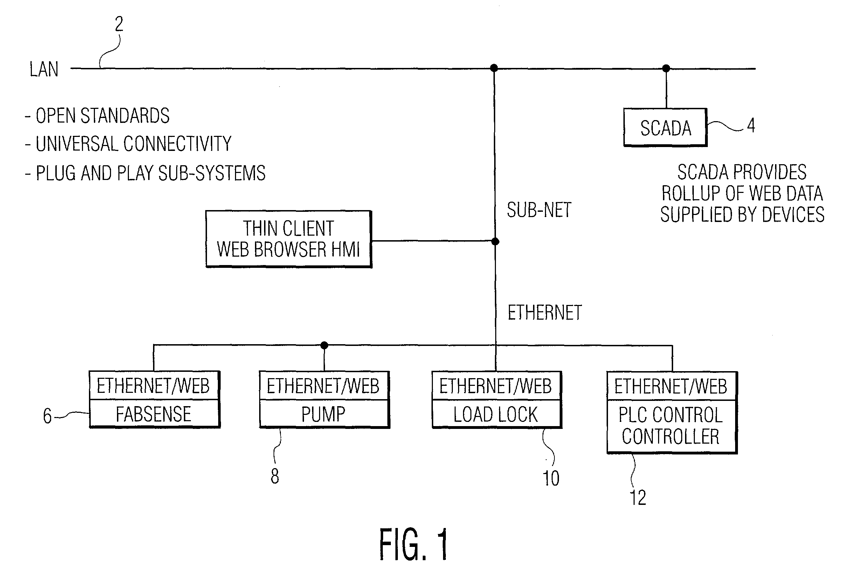

Figure 1 shows a prior art example of how various industrial equipment of a semiconductor processing system can be connected on an Ethernet network (a local area network for data communication). The SCADA system 4 is connected to the Local Area Network (LAN) 2. Various industrial equipment, including a FabSense 6, Pump 8. Load Lock 10, and PLC 12 (programmable logic controller) are connected to transmit information to the SCADA system 4 relative to each of the aforesaid industrial equipment. Optionally, a Thin Client Web Browser HMI 16 (Human Machine Interface) could also be located near the equipment to display the SCADA system 4 information or other equipment or devices information, or to configure the equipment and associated devices. Note that a general purpose PC with web browser can be used in place of the thin client web browser HMI 16. Typically, in the prior art each piece of equipment may have a dedicated controller, but only for controlling that piece of equipment, and perhaps identifying the equipment to other devices or pieces of equipment.

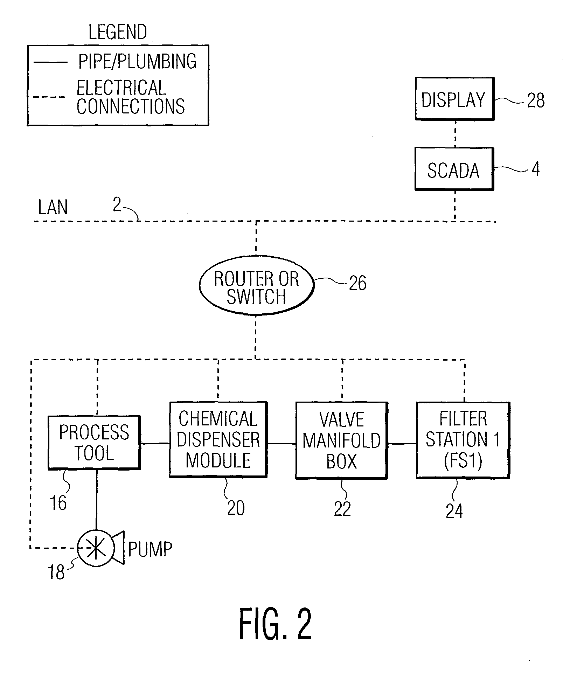

Figure 2 gives an example of how semiconductor process equipment might be plumbed together and connected to a network. As shown in Figure 2, Process Tool 16 is connected to Pump 18 and Chemical Dispenser Module 20. The Chemical Distribution Module 20 is connected both to Process Tool 16 and a Valve Manifold Box 22. The Valve Manifold Box 22 is connected both to the Chemical Distribution Module 20 and a Filter Station 24. Each of these machine elements send a signal to a Router or Switch 26 that describes its functionality and interaction with other elements. Note that the router or switch 26 is not required but is typically used to segment parts of a network The Router/Switch 26 then sends the signals to the SCADA system 4, which builds a Display 28 of the aforesaid machine elements as they are interconnected at a time T1. The Display 28 can be a piping and instrumentation diagram (P&ID) or an electrical diagram or other diagram. Unlike the prior art, in one embodiment of the invention, each device or piece of equipment includes a smart controller or controllers that not only operates its associated equipment, and identifies it to the outside world over the network 2, but also is programmed to provide as previously indicated, the interconnection of the equipment with other devices or pieces of equipment in the industrial equipment network.

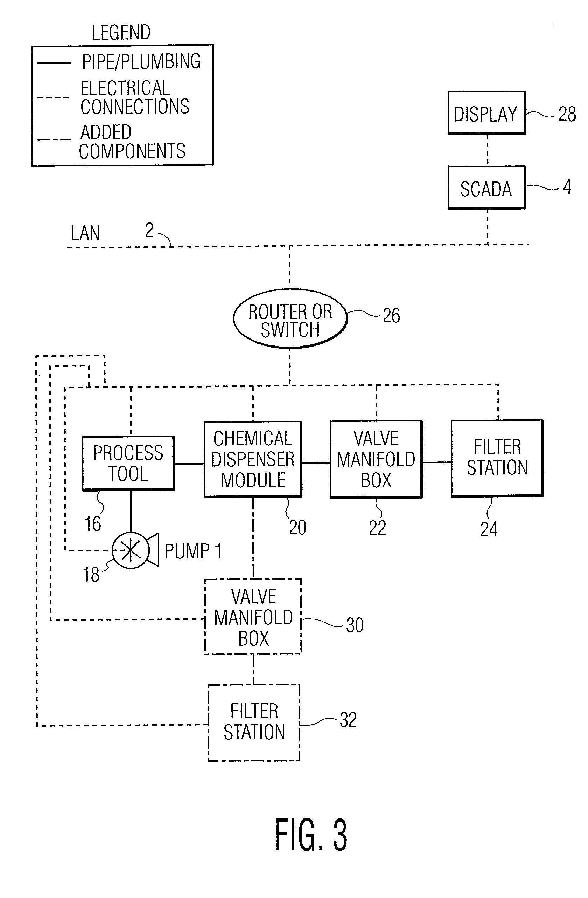

Often new machine elements are added to semiconductor processes. In one embodiment of the invention, Figure 3 illustrates how the self-configuring SCADA system updates its Display 28 after the addition of new machine elements to the equipment or factory network, including a second Valve Manifold Box 30 and second Filter Station 32 plumbed in series to the Chemical Dispenser Module 20. The second Valve Manifold Box 30 and Filter Station 32 are also electrically connected to the Router/Switch 26, which forwards their information to the SCADA system 4. At a time T2, the SCADA system 4 then updates both its records and Display 28, each include the new elements. Note that other equipment or factory networks (not shown) may also be connected to the LAN 2 to communicate with one another.

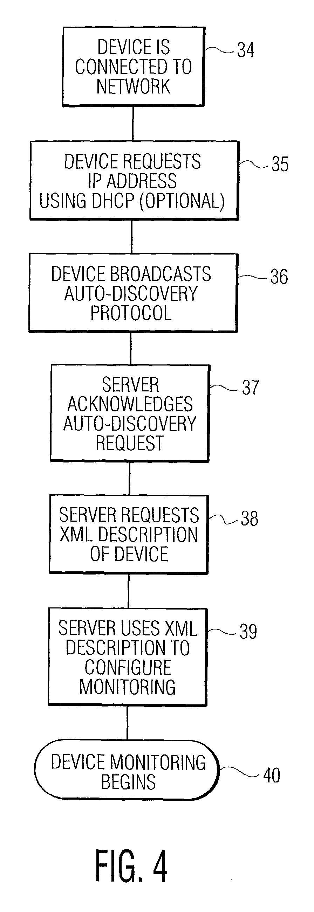

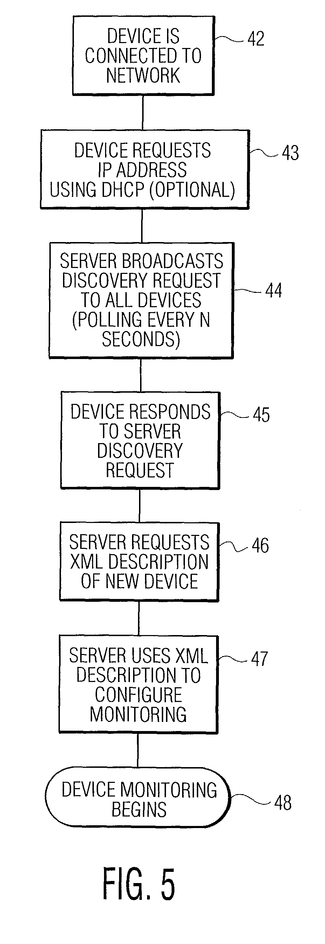

Device Broadcasting enables a machine element to be "auto-discovered" by the SCADA system 4. Figure 4 shows a flowchart that describes this process. Similarly, Server Polling can be used for auto-discovery of an element by the SCADA system 4. Figure 5 shows a flowchart that describes auto-discovery using the Server Polling.

With further reference to the flowchart of Figure 4, auto-discovery of a device installed in the network using device broadcasting begins with Step 34 when the device or machine element (new or modified in configuration) is connected to the network, such as a LAN 2 as shown in Figures 2 and 3, or to a WAN (wide area network), for example. After being so connected, in Step 35, the device requests an Internet Protocol (IP) address using a Dynamic Host Control Protocol (DHCP) server, or uses a previously determined IP address, for example, but is not limited thereto. The device then broadcasts an auto-discovery protocol Step 36. A server, such as one associated with SCADA 4 then detects and acknowledges the auto-discovery request as shown in Step 37. The associated server requests an Extensible Markup Language (XML) or other description of the device in Step 38, and uses this description to configure the necessary monitoring in Step 39, whereafter device monitoring begins in Step 40. In this example, the SCADA 4 has been updated relative to the aforesaid new or modified device connected to the network.

As an alternative to device broadcasting for auto-discovery of the associated device, Server Polling can be used, as previously mentioned relative to the flowchart of Figure 5. More specifically, with further reference to Figure 5, Server Polling is set up by first connecting the new or modified device to the network in Step 42. Next, in Step 43, the device requests an IP address, or uses a previously determined IP address, and can do so by using DHCP, for example. Note that Steps 42 and 43 are substantially the same as Steps 34 and 35 for using device broadcasting. Next, the associated server associated with the system, such as SCADA 4, for example, to ensure it is updated relative to the devices or machine elements connected to the network, broadcasts a discovery request to these devices by polling them periodically, such as every "n" seconds (n = 1, 2, 3, 4, ...). A device or machine element so polled then responds to the server discovery request in Step 45, whereafter in Step 46, the associated server requests an XML or other description of the new or modified device via Step 46, in this example. In Step 47, the server then uses the received XML description to configure a monitoring operation in Step 47, followed by initiating monitoring of the polled device or machine element in Step 48. As indicated, the associated server sends a broadcast message every n seconds to all devices connected to the network. As shown, each device responds to the polling, permitting the server to update its list of known devices. In addition, any new devices are polled directly with a request to respond with their XML descriptions, whereafter the SCADA system 4 adds new devices or pieces of equipment to the monitoring list, and changes the configuration for devices or equipment previously on the list which have been modified relative to their interconnection and/or interaction with other devices or equipment.

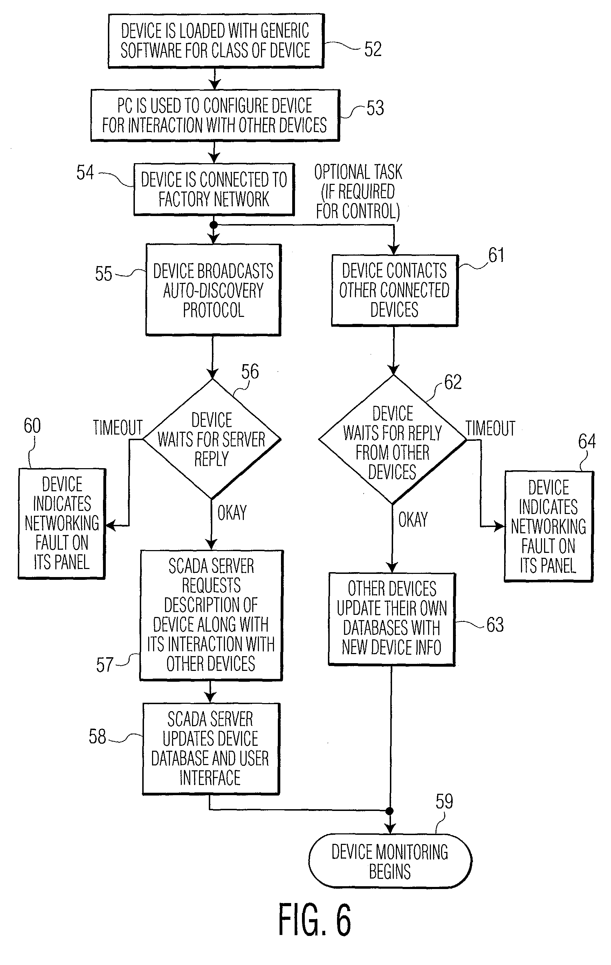

A flowchart for the entire self-configuring SCADA system 4 with auto-discovery is shown in Figure 6. As shown, the device can submit information to just the SCADA system 4 or if required for control to other elements on the network.

With further reference to the flowchart of Figure 6 for a self-configuring SCADA system 4, in the initial Step 52, a controller, for example, is loaded with generic software representative of the class for the associated device. Next, in Step 53, a personal computer (PC) in this example is used to configure the device, that is its controller, for interaction with other devices connected to the network. The device is then connected to the factory or industrial equipment network via Step 54. If no optional tasks are required (Steps 61 through 64), Step 55 is pursued for having the associated device broadcast an auto-discovery protocol. Note that the new device can make first contact with the SCADA system 4 server (not shown) by either broadcasting its presence using an auto-discovery protocol as previously described for the flowchart of Figure 4, or by waiting for a polling request from the SCADA system 4 server as previously described for the flowchart of Figure 5. The device then waits for the server to reply as indicated in Step 56, and if a reply is received, then in Step 57, the associated server for the SCADA system 4 requests a description of the device and details describing its interaction with other devices in the network. Next, in Step 58, the server associated with the SCADA system 4 updates its device database and user interface, and begins monitoring the device in Step 59. As further shown, a new device or a device modified in its interconnection can optionally contact other devices connected to the network, as shown in Step 61, which the device interacts with directly as required by the associated control system design. In the event that other devices connected to the factory or industrial equipment network only have to be alerted of the new device at a time when the device makes an actual request for service from one of these other devices, then Steps 61 through 64 need not be pursued until such a service request is made. Note further that in Step 56, if the device indicates while waiting for a server reply that there is a networking fault, or there is no response from the server after a timeout period, Step 60 is then entered. Similarly, in Step 62, if while waiting for a reply from other devices the new or modified device indicates that there is a networking fault, or no reply after a timeout period, then Step 64 is entered.

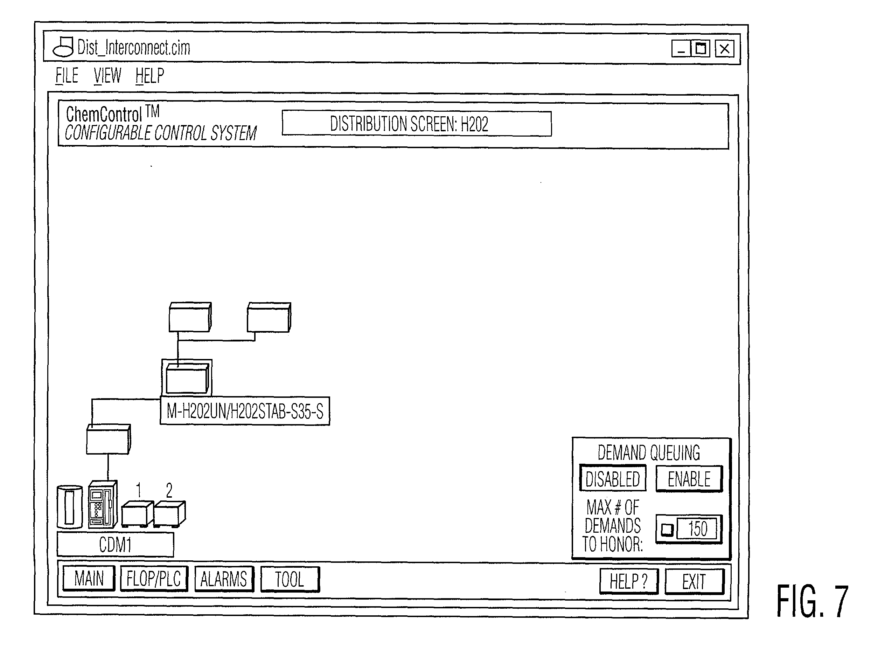

Examples of SCADA screen displays or screen shots are shown in Figures 7 through 11. More specifically, in Figure 7 entitled "Distribution Screen: H2O2," the interconnection of devices related to H₂O₂ chemical flow is shown. In this example, the display is for a high level view, in which individual components are not labeled.

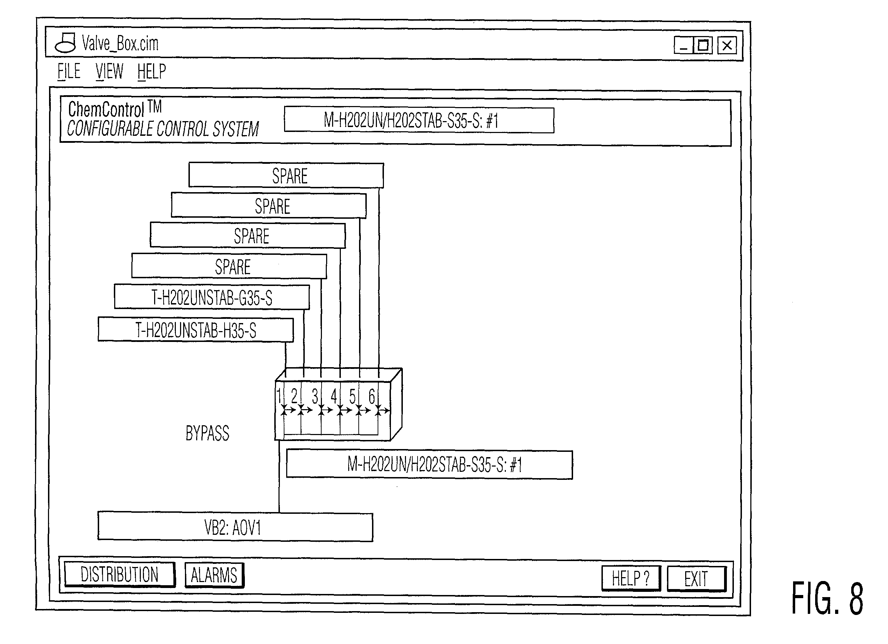

In Figure 8, a valve box screen shows the connections of an individual valve box in an associated industrial processing system. The display shows how the valve box permits chemicals to flow from a source at the bottom of the screen to any one or combination of the six outlet connections shown at the top of the screen. The labels show the names of the connections as used in the system.

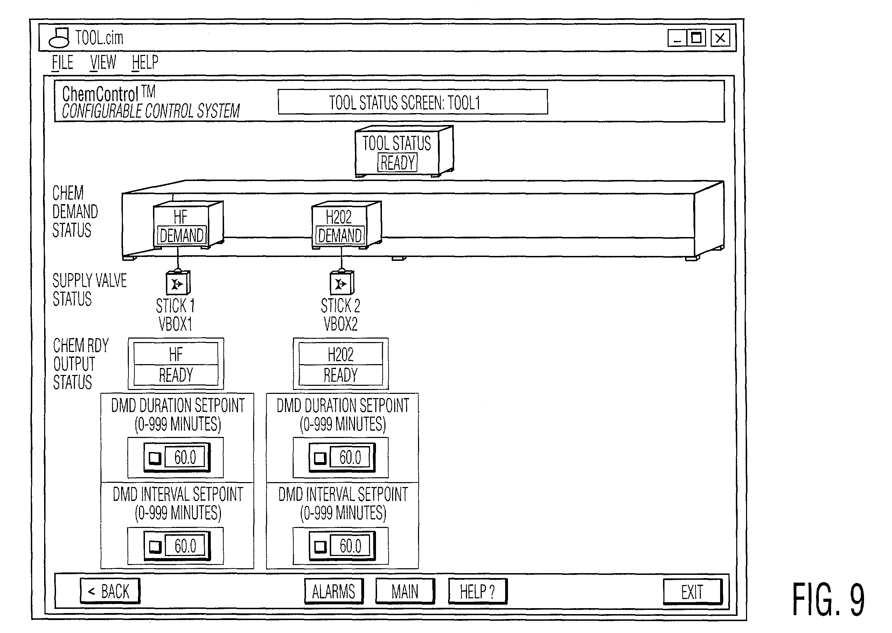

In the display of Figure 9, entitled "Tools Status Screen: Tool1," the status for that individual tool is shown. In this example, the tool happens to be at the end of an industrial processing system for receiving certain chemicals. The screen example shows that the tool is currently demanding H₂O₂ and HF. The display also shows that supply valves upstream are open, through use of a green color for the boxes labeled "Stick 1 VBOX1," and "Stick 2 VBOX2." Note for the purposes of this description assume that the valve box symbols are green, although they are shown otherwise in the drawing for Figure 9. The display also shows that the chemical supply for the aforesaid two chemicals is "READY." Lastly, the bottom portion of this display shows a number of set points related to the chemical demands.

An example will now be given of a device description file sent from a valve box to the SCADA system and also to all other devices that directly interact with the valve box. The syntax used to describe a device will be determined by the actual application. In the preferred embodiment this description is formatted using XML to provide a common syntax available for networked devices. This file will be sent in its entirety to the associated SCADA system when requested. The entire file may not be sent to each directly connected device, but rather parsed to send to the connected device only those sections relevant to the connected device. In the example below, which does not use XML in order to make the description clearer, a valve manifold box is described which contains four valves (only one is shown). The valve box is connected downstream to a tool, for example, and this tool might only receive those portions of the file that directly apply to it.

The device description file is organized as a hierarchy. A valve box is a device that contains valve components and alarm components. Each valve contains inlet and outlet components. Valves can be opened or closed as indicated by the ACTION blocks. The valve box has two possible alarm signals, DOOR_OPEN and LEAK to indicate faults. When a SCADA system asks the device for the status of the alarms, it might receive the message "DOOR_OPEN" or if there were no alarms, "NO_ALARM". This file describes the device to other devices or to a central monitoring computer (SCADA). It does not define how messages are to be passed back and forth. This can be determined by the actual implementation.

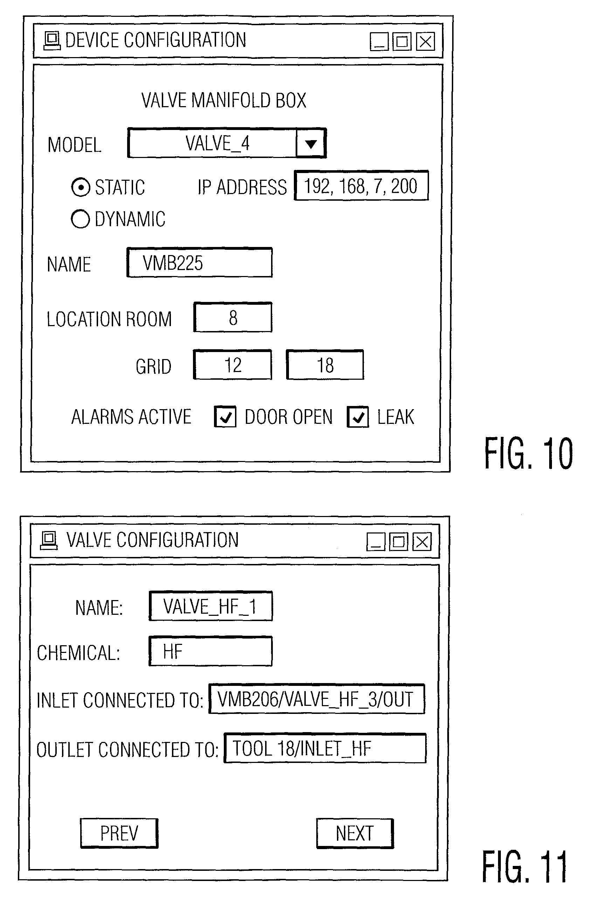

In distributed systems where the same device may be used several times, it is convenient to make it possible to configure devices with little effort. The screens of Figures 10 and 11 show a device configuration program or means which allow a user to enter the operating parameters of the device. A utility program would then create a description file as shown below and load it onto the device's memory. Ideally, the configuration utility software is contained in the device itself, and the configuration screens presented as Web pages to allow a user to connect a computer with Web browser software to the device, and configure it with no proprietary software on the computer itself. In addition to creating the device description file, the same information is used to configure the operational program for the device. An example of the description file is as follows:

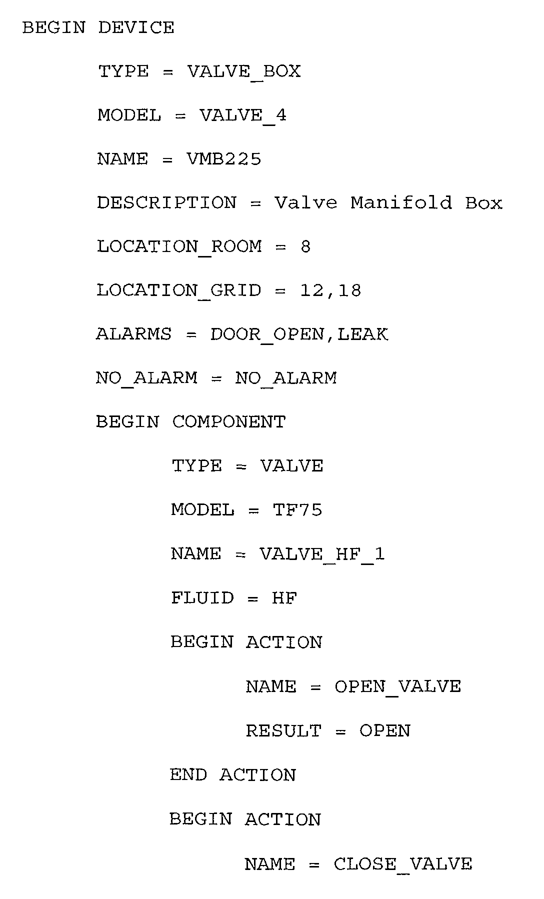

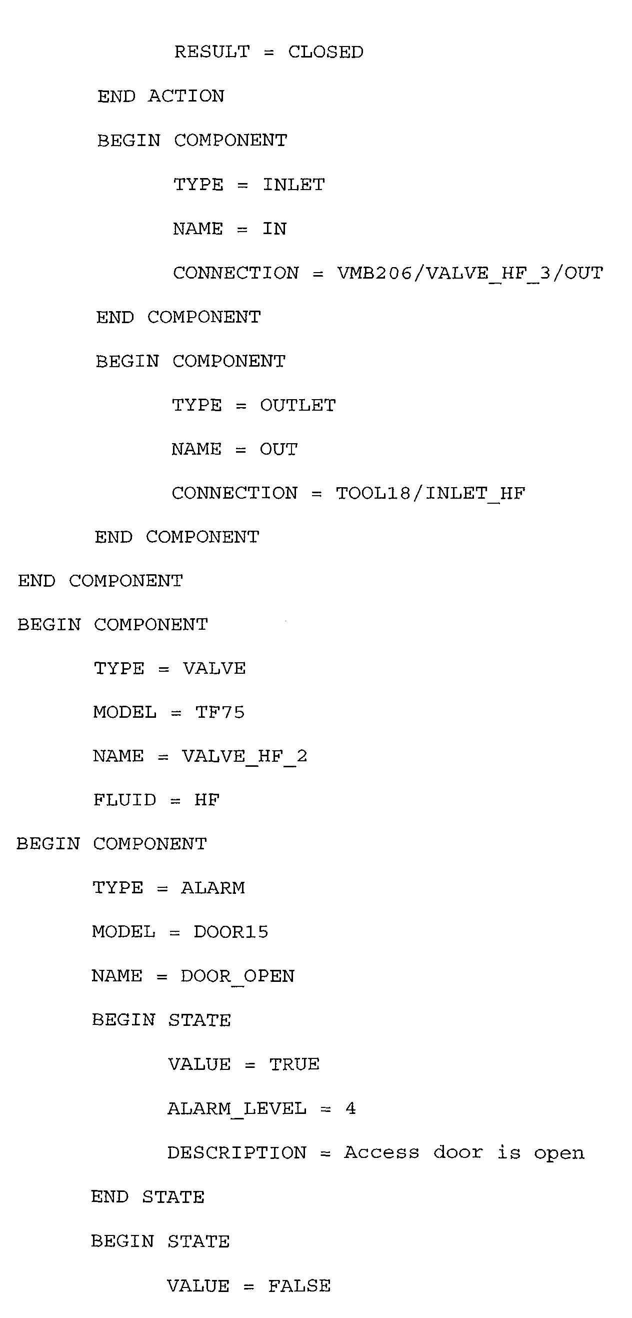

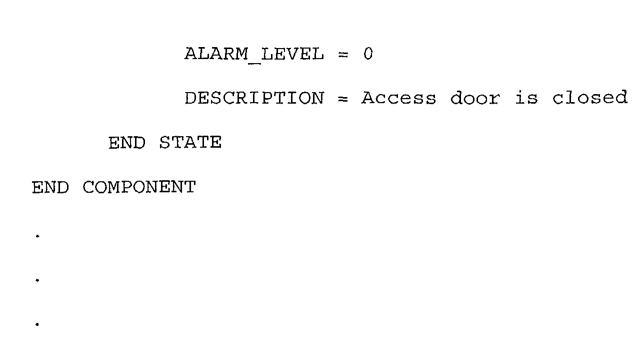

In the case of the valve manifold box example of Figure 8, the valve box must communicate with both upstream and downstream devices as well as respond to requests from the supervisory computer. This control program would be written in a language appropriate for the device and stored in the device's internal memory. Where there are many such devices in a typical chemical processing system, the configuration utility can create a database inside the valve box controller that would be used by the main program running on a controller dedicated to the valve box to instruct it as to how it is connected to other devices. The program contains the method of operation while the database tells the program what devices are connected and how to interact with those external devices.

In Figure 10, a general configuration screen is shown for the valve manifold box, whereas in Figure 11 a configuration screen is shown for an individual valve. A complete set of screens would include four valve screens since in this example the valve box contains four valves. If an eight valve box is monitored, there would be eight valve screens to fill in, and so forth. This is a simplified example of the configuration utility. An actual system would include additional networking parameters as well as more detailed alarm conditions. One benefit of using configuration screens is that there can be multiple layers of screens. One layer might define lower level settings such as how to handle false alarms, what timeout period to signal a communications failure, what sub-net mask to use in networking, etc. These lower level screens might be configured before the device was shipped and then the screens shown configured on site.

The software that runs at each device depends on both the functions of the device and its interaction with other components in the system. Flowcharts showing the operation will vary widely. Every device operates to evaluate all of its inputs and then set its outputs. Some devices will use a combination of a fixed program and a database describing the configuration of that device while others may need a unique program for their operation.

The software in the SCADA system 4 must perform a number of tasks. One task is to receive file descriptions from each distributed controller in the system and construct a database of all points that need to be monitored.

Another task is to create a graphical representation of the system using its knowledge of the individual types of devices contained in the system and the description files that it receives. This allows the SCADA software to construct the graphical view shown in the screen shots of valve box (Figure 8), distribution (Figure 7), and tool (Figure 9). While the SCADA system 4 typically has knowledge of the way a device type will be represented and monitored, this is not absolutely necessary. If each device sends a much more complete description, including graphical representations of itself, names and descriptions of all of its inputs and outputs, and the type of connections that it can make to other devices, then the SCADA software can provide supervisory functions with no advance knowledge of the device. This is similar to the concept of plug and play found in Windows PCs, although even here the PC may have advance knowledge of the class of device.

A third task is to monitor each device in the system to allow the graphical representations to be updated in real-time and to signal operators to alarm and other conditions. All of these tasks help to increase user efficiency.

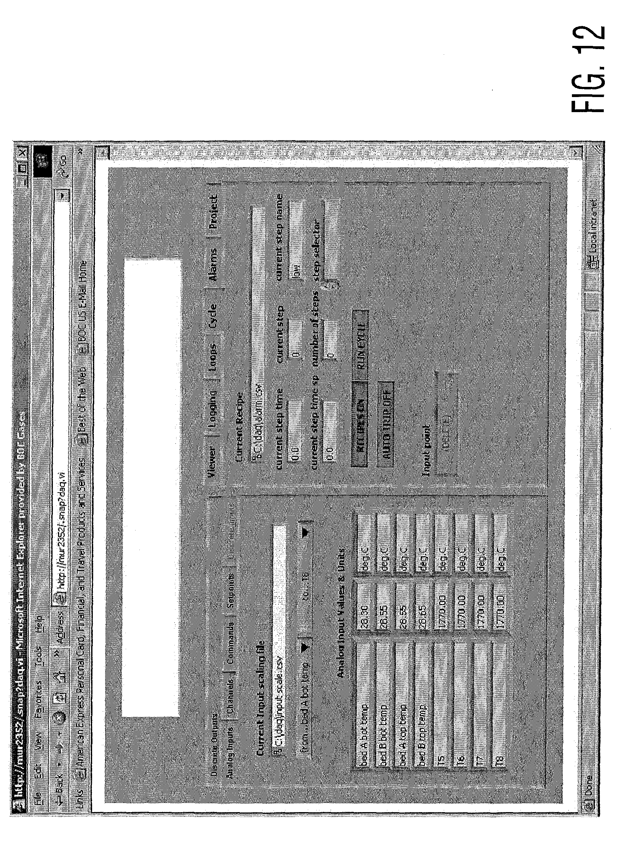

The SCADA software can be configured to make use of the device's own Web pages if they are available. This can alleviate the need for the SCADA software to have knowledge of its inner workings. The SCADA software can show a simple block diagram representation of the device, and if the user clicks on that block, the SCADA software will use associated Web browser software to display the Web page retrieved from the device itself. This is particularly helpful if the device is complex since it eliminates the need for the SCADA software to track all the internal states of every connected device. If a human operator or an external program is interested in the temperature or temperatures of an internal component in one of the devices, for example, they need only request the Web page resident on that device. For example, in Figure 12 a screen image of Web page shows the status of a piece of equipment, more specifically, temperatures in different sections or portions of the equipment are shown. The SCADA software just passes this information through to the end user and does not need to add it to its own data logs. Of course, any data that needs to be continually tracked could be stored in the SCADA data logs.

One advantage of using intelligent distributed devices is that they can assume nearly all of the tasks traditionally done by the SCADA system 4. For example, each valve manifold box can log its own operation in its own internal memory and format it for display in a Web page. The SCADA system 4 just allows the user access to the Web page on the device. This has a number of advantages including making the system more modular, reducing network traffic and allowing the operational history to be examined on a device that is removed from the system.

Not every control system lends itself to distributed control. There are applications in which decisions must be made based on the status of several sensors. In such applications, an intelligent central controller is required.

The self-configuring SCADA system 4 with auto-discovery eliminates the need to reprogram SCADA software every time an element is added to or removed from the network. Furthermore, the same program can be used for the SCADA software at different sites, which reduces the requirement for specialized programming. Having a SCADA system 4 that automatically builds a display by integrating information from multiple elements on the network can greatly increase the efficiency and reduce the costs of starting up and maintaining a semiconductor plant, for example. However, the present invention is not limited to semiconductor plant applications, and can be applied for use in numerous other industrial plants.

Although various embodiments of the present invention have been shown and described above, they are not meant to be limiting. Those of skill in the art may recognize various alternatives to these embodiments, which alternatives are meant to be covered by the spirit and scope of the appended claims.

## Claims

1. An industrial equipment network for interconnecting a plurality of devices, the network comprising:
a plurality of controllers each for providing a respective device with control and data functions for interacting with other devices in the equipment network, and other systems;
a data network for receiving from each controller information relating to its respective device and to the interaction of its device with other devices or equipment connected to the network;
and a Supervising Control and Data Acquisition (SCADA) system for receiving the information from the data network and utilising the received information to automatically create and/or up-date a network configuration representation.

2. A network according to Claim 1, wherein each controller comprises a programmable logic controller (PLC).

3. A network according to Claim 1 or Claim 2, wherein said data network comprises a local area network (LAN).

4. A network according to any preceding claim, wherein the SCADA system is configured to transmit over the data network a request for a controller to transmit said information over the network.

5. A network according to Claim 4, wherein the SCADA system is configured to transmit said request in response to a message broadcast over the data network by a controller.

6. A network according to Claim 5, wherein each controller is configured to transmit said message upon connection to the data network or upon a change in its configuration.

7. A network according to any of Claim 4 to 6, wherein the SCADA system is configured to transmit periodically said request to each of the controllers connected to network.

8. A method of permitting a Supervisory Control and Data Acquisition (SCADA) system to automatically map the interconnection and interaction, and changes thereto, between a plurality of pieces of industrial equipment and/or a plurality of devices that may be connected to one another, said method comprising:
establishing a data network over which said pieces of industrial equipment and/or devices can selectively communicate with one another and with the SCADA system;
connecting different ones of said plurality of pieces of industrial equipment and/or devices each to either a common controller, or each to individual dedicated controllers, respectively, or each to a plurality of controllers, or some combination thereof; and
programming each controller to control and identify its associated piece of industrial equipment and/or device, and for transmitting data representative of the interconnection and interaction thereof with other ones of said plurality of pieces of industrial equipment and/or devices, both to the latter equipment and/or devices, and to said SCADA system over said data network.

9. A method according to Claim 8, comprising the steps of:
assigning a unique IP address to each one of said plurality of pieces of industrial equipment and/or devices upon request as they are connected to the network;
broadcasting onto the data network an auto-discovery protocol including the associated IP address from each piece of equipment or device when it is added to the network, or thereafter when a change is made to its interconnections and interaction with other of said plurality of pieces of equipment, and/or devices;
acknowledging via a server of said SCADA system the receipt of an auto-discovery request;
transferring to said server a description of the associated piece of equipment or device, to permit said SCADA system to configure monitoring;
operating said SCADA system to automatically monitor either by polling or receiving broadcasts from said piece of equipment or device; and
programming said SCADA system to automatically update and include the associated piece of equipment or device in a map identifying and showing each, and their interaction with other ones of said plurality of pieces of equipment and/or devices.

10. A method according to Claim 9, wherein an extensible mark-up language (XML) is used for describing or providing information for each one of said plurality of pieces of industrial equipment or devices, respectively.

11. A method according to Claim 8, comprising the steps of:
assigning a unique IP address to each one of said plurality of pieces of industrial equipment and/or devices upon request as they are connected to the network;
programming a server in said SCADA system to periodically poll said plurality of pieces of industrial equipment and/or devices;
operating a controller of each polled device or piece of industrial equipment to respond to the poll by providing a description thereof; and
operating said server to use the description to configure monitoring of the associated device or piece of industrial equipment, whereafter device or equipment monitoring begins.

12. A method according to Claim 11, wherein an extensible mark-up language (XML) is used by an associated controller to describe each polled device or piece of industrial equipment.

13. A method according to any of Claims 8 to 12, comprising the steps of:
configuring each dedicated controller for having its associated device or piece of industrial equipment interconnect and interact with selected other ones of said plurality of pieces of industrial equipment and/or devices;
operating each controller for connecting its associated device or piece of equipment to said network;
operating each controller to respond to a request from said server to provide both a description of the associated device and/or piece of equipment, and its interaction with other devices and/or pieces of equipment;
operating said server, in response to the description and interaction of said plurality of devices and/or pieces of equipment, to initially establish and
thereafter update a database and a user interface of said SCADA system; and
operating said server to begin monitoring the associated device.

14. A method according to Claim 13, wherein an extensible mark-up language (XML) is used to describe each device and/or piece of equipment, and their respective interaction.

15. A method according to Claim 13 or Claim 14, comprising the steps of:
measuring the time for said server to respond to a controller of a device or piece of equipment awaiting a reply; and
indicating a network fault, and interrupting further SCADA system processing for the associated device or piece of equipment, if no reply is received within a predetermined period of time.

16. A method according to any of Claims 8 to 12, comprising the steps of:
configuring each controller for having its associated device or piece of industrial equipment interconnect and interact with selected other ones of said plurality of pieces of industrial equipment and/or devices;
operating each controller for connecting its associated device or piece of equipment to said network;
operating each controller to request a reply from a respective controller of each selected one of other of said plurality of devices and/or pieces of equipment;
operating each controller to wait for a reply; and
operating a requesting controller in response to a reply from another controller to provide the latter with data for updating a database of its associated device or piece of equipment with identification and
interconnection data associated with the device or piece of equipment of the requesting controller.

17. A method according to Claim 16, wherein said step of operating each controller to wait for a reply includes the steps of:
measuring the time from making a request for reply to the receipt of a reply; and
indicating a network fault and interrupting further processing if no reply is received within a predetermined period of time.

18. A method according to any of Claims 13 to 15, including the steps of:
operating each controller to request a reply from a respective controller of each selected one of other of said plurality of devices and/or pieces of equipment;
operating each controller to wait for a reply; and
operating a requesting controller in response to a reply from another controller to provide the latter with data for updating a database of its associated device or piece of equipment with identification and
interconnection data associated with the device or piece of equipment of the requesting controller.

19. A method according to Claim 18, wherein said step of operating each controller to request a reply from a respective controller of each one of said plurality of devices and/or pieces of equipment, further includes the steps of:
measuring the time from making a request for reply to the receipt of a reply; and
indicating a network fault and interrupting further processing if no reply is received within a predetermined period of time.
